# EUROPÄISCHE PATENTANMELDUNG

(11) **EP 0 580 037 A1**
(43) Veröffentlichungstag der Anmeldung: **26.01.1994**
(21) Anmeldenummer: 93110994.6
(22) Anmeldetag: 09.07.1993
(51) Int. Cl.: B60J 11/00

(54) **Verwendung einer haftenden Oberflächenschutzfolie zum Transport von Automobilen**

(30) Priorität: 20.07.1992 DE 4223822
(71) Anmelder: BASF Aktiengesellschaft, D-67063 Ludwigshafen (DE)
(72) Erfinder: Joest, Bernd, D-6941 Abtsteinach (DE); Keller, Rudolf, D-6903 Neckargemuend (DE); Muenstedt, Helmut, Dr., D-6706 Wachenheim (DE)

(57) **Zusammenfassung**

Verwendung einer haftenden Oberflächenschutzfolie zum Transport von Automobilen. Die Oberflächenschutzfolie übernimmt dabei eine Schutzfunktion während des Transports des Automobils vom Produzenten zum Händler. Vorzugsweise besteht die haftende Oberflächenschutzfolie aus wenigstens einer Haftschicht und wenigstens einer, auf dieser Haftschicht aufgebrachten Schutzschicht. Im Gegensatz zu den bisher für diesen Zweck verwendeten Wachsschichten läßt sich die Oberflächenschutzfolie sehr leicht entfernen und entsorgen.

## Beschreibung

Die vorliegende Erfindung betrifft die Verwendung einer haftenden Oberflächenschutzfolie zum Transport von Automobilen.

Nach der heutigen Praxis werden neu produzierte Automobile nach Abschluß der Lackierarbeiten mit einem Transportschutz versehen, der gewährleistet, daß während des Transportes vom Produzenten zum Händler eine Beschädigung des Fahrzeuglackes durch Kratzer oder durch Umwelteinflüsse wie Regen, Schnee oder Schmutz ausgeschlossen werden kann. Zur Zeit besteht dieser Transportschutz aus verschiedenen Wachsen, die nach Beendigung der Lackierarbeiten auf den Lack des Automobils aufgebracht werden. Nach Empfang des Automobils durch den Händler muß dieser die Wachsschicht durch ein relativ aufwendiges Entwachsungsverfahren wieder entfernen. Die dabei verwendeten Lösungsmittel stellen für den Händler darüber hinaus ein nicht unerhebliches Entsorgungsproblem dar.

Seit einiger Zeit besteht für den Automobilhändler die Möglichkeit, die Entwachsung des Automobils in sogenannten Entwachsungszentren durchführen zu lassen, wo die Entsorgung des dabei anfallenden Lösungsmittels sowie der Wachsreste günstiger durchgeführt werden kann. Die Entfernung der Wachsschicht in derartigen Entwachsungszentren ist jedoch für den Händler mit einem finanziellen und zeitlichen Mehraufwand verbunden, da er für den Transport zum Entwachsungszentrum und zurück sowie für die dabei entstehenden Kosten aufkommen muß. Darüber hinaus fallen auch bei dieser Möglichkeit erhebliche Mengen von Lösungsmitteln und Wachsresten an, die entsorgt werden müssen und daher auch zur Umweltbelastung beitragen.

Der vorliegenden Erfindung lag daher die Aufgabe zugrunde, den geschilderten Nachteilen abzuhelfen und für dieses Problem eine umweltfreundlichere und insbesondere für den Händler eine bessere Lösungsmöglichkeit anzubieten.

Diese Aufgabe wurde durch die Verwendung einer haftenden Oberflächenschutzfolie zum Transport von Automobilen gelöst. Diese Oberflächenschutzfolie übernimmt dabei die Schutzfunktion des Wachses während des Transportes des Automobils vom Produzenten zum Händler.

Die zu diesem Zweck verwendete haftende Oberflächenschutzfolie soll dabei zum einen auf der Lackschicht des Automobils auch bei erhöhten mechanischen Belastungen wie beispielsweise starken Luftströmungen beim Transport auf Lastwagen oder Eisenbahnwaggons noch gut haften und zum anderen zugleich als Schutzschicht gegen mechanische Beschädigungen und Umwelteinflüsse wie Regen, Schnee, Hagel oder Schmutz dienen.

Vorzugsweise besteht die haftende Oberflächenschutzfolie aus wenigstens einer Haftschicht und wenigstens einer, auf dieser Haftschicht aufgebrachten Schutzschicht. Es kann aber auch eine solche Oberflächenschutzfolie verwendet werden, die jeweils mehrere Haftschichten bzw. Schutzschichten aufweist.

Die Haftschicht soll dabei sowohl eine gute Haftung zur Fahrzeugkarosserie als auch zu der über ihr liegenden Schutzschicht aufweisen. Als Haftschichten werden dabei die in der Technik üblichen Haftfolien, beispielsweise Klebefolien oder Folien aus mit bestimmten funktionellen Gruppen modifizierten Polymeren verwendet. Bevorzugt setzt man für diesen Zweck Acrylatklebefolien oder Folien aus mit funktionellen Gruppen modifizierten thermoplastischen Polymeren ein. Besonders bevorzugte Haftfolien bestehen aus mit ungesättigten Carbonsäurederivaten gepfropften Polyolefinen, beispielsweise aus gepfropften Polymerisaten des Ethylens oder des Propylens, die jeweils noch untergeordnete Anteile anderer α-Monoolefine enthalten können. Unter den Begriff ungesättigte Carbonsäurederivate fallen in diesem Zusammenhang sowohl die entsprechenden Carbonsäuren, als auch deren Anhydride, Ester, Amide, Imide und Säurehalogenide. Vorzugsweise werden für derartige Zwecke insbesondere die Anhydride und Ester der Maleinsäure, der Acrylsäure, der Methacrylsäure und der Glutarsäure eingesetzt. Aus derartigen gepfropften Polyolefinen können die entsprechenden Folien u.a. in Kalandern oder Extrudern nach dem Blas- oder Breitschlitzfolien-Verfahren bei einer Temperatur von 170 bis 240°C, einem Druck von 250 bis 400 bar und einer mittleren Durchlaufzeit von 5 bis 20 min. hergestellt werden. Weitere besonders bevorzugte Haftschichten bestehen aus Kautschukklebern.

Die Herstellung derartiger, mit ungesättigten Carbonsäurederivaten gepfropfter Polyolefine erfolgt üblicherweise durch Umsetzung von ungesättigten Carbonsäurederivaten mit Polyolefinen bei Temperaturen von 100 bis 300°C, Drücken von 10 bis 100 bar und mittleren Verweilzeiten von 0,2 bis 30 Minuten in geeigneten Mischvorrichtungen, beispielsweise in Extrudern. Gegebenenfalls kann die Umsetzung auch in Anwesenheit von radikalisch zerfallenden Initiatoren, beispielsweise Peroxiden oder Azoverbindungen, durchgeführt werden. Derartige Herstellungsverfahren sind beispielsweise aus den Offenlegungsschriften DE-OS 40 22 569 und DE-OS 40 22 570 bekannt. Kautschukkleber können üblicherweise über den Fachhandel bezogen werden.

Die zu diesem Zweck verwendeten Polyolefine sind u.a. durch Ziegler-Natta-Polymerisation mit titanhaltigen Katalysatoren, durch Polymerisation mit chromhaltigen Phillipskatalysatoren, durch Hochdruckpolymerisation in Anwesenheit radikalisch zerfallender Initiatoren oder durch Polymerisation mit metallocenhaltigen Katalysatoren erhältlich (EP-A 45 977, US-A 4 857 613, US-A 5 100 978, EP-A 323 716). Die Polymerisation kann dabei sowohl in der Gasphase, als auch in einer Suspension oder in Lösung vorgenommen werden. Derartige Polyolefine sind u.a. unter den Handelsnamen Lupolen® und Novolenen® der BASF Aktiengesellschaft erhältlich.

Die Hauptaufgabe der auf der Haftschicht aufgebrachten Schutzschicht besteht im wesentlichen darin, gegenüber starken Umwelteinflüssen wie beispielsweise Regen oder Schneefall möglichst unempfindlich zu sein und darüber hinaus Belastungen wie Schmutz oder chemische und mechanische Einwirkungen von der Lackschicht fernzuhalten. Als Schutzschichten können insbesondere thermoplastische Polymere wie beispielsweise Polyamide, Polystyrol, Polyester, Polycarbonate oder Polyolefine eingesetzt werden. Bevorzugt werden dabei Schutzschichten aus Polyolefinen verwendet, beispielsweise aus Ethylenhomopolymerisaten, Propylenhomopolymerisaten oder aus statistischen Propylen-Ethylen-Copolymerisaten. Die Herstellung derartiger Polyolefine kann durch die dem Fachmann geläufigen Polymerisationsarten erfolgen, beispielsweise durch Ziegler-Natta-Polymerisation, durch Polymerisation mit Hilfe von Phillipskatalysatoren, durch Hochdruckpolymerisation oder durch Polymerisation mit Hilfe von metallocenhaltigen Katalysatoren. Aus diesen Polyolefinen können die entsprechenden Schutzfolien analog den Haftfolien u.a. nach dem Blas- oder Breitschlitzfolien-Verfahren hergestellt werden.

Die Herstellung der erfindungsgemäß zu verwendenden haftenden Oberflächenschutzfolie erfolgt üblicherweise durch möglichst flächengleiches Auftragen der entsprechenden, als Schutzschicht dienenden Folie auf eine geeignete Haftfolie. Derartige Herstellungsverfahren für mehrschichtige Folien erfolgen üblicherweise nach dem Beschichtungsverfahren, dem Kaschierverfahren oder dem Blas-/Breitschlitz-Coextrusionsverfahren.

Beim Beschichtungsverfahren beispielsweise wird zunächst die zu verwendende Beschichtungsmasse auf eine Trägerbahn aufgetragen, anschließend werden die Arbeitsgänge Gelieren, Kühlen, Abziehen und Aufwickeln durchgeführt. Bei der eigentlichen Coextrusionsbeschichtung wird in einer Beschichtungsanlage mit einem Schmelzefilm, der in einem Extruder aufgeschmolzen und über eine Breitschlitzdüse ausgetragen wird und aus einem oder mehreren Polymerschichten bestehen kann, beschichtet. Der dabei entstehende Verbund wird anschließend in einer Kühl-Anpreßwalzen-Einheit abgekühlt und geglättet. Danach erfolgt die Aufwicklung der Verbundbahn in einer entsprechenden Wickelstation.

Beim Kaschierverfahren werden analog dem Beschichtungsverfahren ebenfalls die Arbeitsgänge Auftragen der Beschichtungsmasse auf die Trägerbahn, Glätten und Kühlen, Abziehen und Aufwickeln durchgeführt. Bei der eigentlichen Extrusionskaschierung läßt man eine vorgefertigte Trägerbahn in einen Glättwerkwalzenstuhl, der 3 bis 4 Walzen aufweist, einlaufen. Dabei wird die Trägerbahn vor dem ersten Walzenspalt mit einem Schmelzefilm, der in einem Extruder aufgeschmolzen und über eine Breitschlitzdüse ausgetragen wird, beschichtet. Vor dem zweiten Walzenspalt läßt man eine zweite vorgefertigte Bahn zulaufen. Der dabei entstehende Gesamtverbund wird beim Durchlauf durch den zweiten Walzenspalt geglättet, anschließend gekühlt, abgezogen und in einer Wickelstation aufgewickelt.

Nach dem Blas-/Breitschlitz-Coextrusionsverfahren werden allgemein zunächst verschiedene Polymere in unterschiedlichen Extrudern unter geeigneten Bedingungen aufgeschmolzen und anschließend in Form der Schmelzeströme unter Ausformen eines Mehrschichten-Schmelzestroms im Coextrusionswerkzeug zusammengeführt. Danach erfolgt das Austragen, Abziehen und Abkühlen der Mehrschichtenschmelzebahn und das Aufwickeln des Verbundes. Auf diese Weise erhält man eine Verbundfolie.

Derartige Verfahren werden bei Temperaturen von 170 bis 300°C, Drücken von 250 bis 400 bar und mittleren Durchlaufzeiten von 5 bis 20 min. üblicherweise durchgeführt.

Die auf diese Weise erhältlichen haftenden Oberflächenschutzfolien lassen sich erfindungsgemäß zum Transport von Automobilen verwenden. Das Aufbringen der haftenden Oberflächenschutzfolie auf die Lackschicht des Automobils kann dabei sowohl von Hand durch leichtes Aufpressen der Folie, als auch durch Einsatz von rotierenden Folienwalzen erfolgen, die ähnlich wie die in Autowaschstraßen gebräuchlichen Walzen langsam über das Automobil bewegt werden. Die Unterseite des Automobils bleibt dabei ebenso wie der Bereich der Räder von der Oberflächenschutzfolie frei. Darüber hinaus kann es sich empfehlen, den Bereich der Frontscheibe des Automobils von der Oberflächenschutzfolie auszusparen, um auf diese Weise kurze Fahrten des mit der Oberflächenschutzfolie bedeckten Automobils, beispielsweise vom Autotransporter zum Händler, zu ermöglichen.

Weiterhin ist es möglich, die haftende Oberflächenschutzfolie im Bereich der Fahrertür des Automobils mit einem durch eine Perforation leicht von der übrigen Oberflächenschutzfolie entfernbaren Bereich zu versehen, was ein leichtes Einsteigen in das Automobil ohne größere Beschädigung der Folie ermöglicht. Derartige Perforationen werden üblicherweise durch das In-Line-Perforations-Verfahren auf Folien aufgebracht. Darüber hinaus kann die Fahrertür des Automobils auch mit einer eigenen haftenden Oberflächenschutzfolie getrennt vom übrigen Automobil versehen werden.

Mit Hilfe der erfindungsgemäßen Verwendung der haftenden Oberflächenfolie kann der Transport von Automobilen vom Produzenten zum Händler leichter und umweltfreundlicher durchgeführt werden. Durch die Haftung der Folie auf der Karosserie des Automobils wird ein Aufblähen der Folie beim auftretenden Fahrtwind vermieden, so daß eine Beschädigung der Folie beim Transport unterbleibt. Beim Händler kann die haftende Oberflächenschutzfolie anschließend ohne aufwendigen Entwachsungsvorgang durch einfaches Abziehen vom Automobil entfernt werden.

Eine Nachbehandlung der Karosserie des Automobils mit Wasser oder chemischen Lösungsmitteln erübrigt sich ebenso wie die Entsorgung von Wachsresten oder Lösungsmittelabfällen. Die haftende Oberflächenschutzfolie kann platzsparend aufgewickelt und als sortenreine Kunststoffolie ohne weiteren Trennvorgang einer gezielten Wiederverwertung zugeführt werden.

Die Verwendung einer haftenden Oberflächenschutzfolie zum Transport von Automobilen ist für alle gebräuchlichen Fahrzeugtypen denkbar. Neben Personenkraftwagen eignen sich dafür u.a. auch Kleinbusse, kleinere Lastkraftwagen, Campingwagen, Geländefahrzeuge und Nutzfahrzeuge.

### Beispiele

Die nachfolgenden Beispiele 1 und 2 sollen die erfindungsgemäße Verwendung der haftenden Oberflächenschutzfolie näher erläutern. Dabei wurde jeweils eine Oberflächenschutzfolie verwendet, die aus einer Haftschicht aus einem natürlich vernetzten Kautschukkleber und einer darauf angebrachten Schutzschicht aus einem Ethylenhomopolymerisat bestand. Die jeweiligen Oberflächenschutzfolien wurden mit Hilfe einer Andruckrolle blasenfrei auf die Lackoberfläche mehrerer Bleche mit schwarzem, rotem, grünem oder pinkfarbenen Lack aufgebracht.

### Beispiel 1

Dabei wurden die Schälfestigkeiten der Oberflächenschutzfolien-Blechverbunde bei verschiedenen Temperaturen getestet. Darüber hinaus wurden die Lackoberflächen nach Abzug der Folien auf Oberflächenveränderungen und Kleberablagerungen hin visuell, mittels eines Lichtmikroskops oder mittels Oberflächen-Infrarotspektroskopie untersucht.

Die aus der Oberflächenschutzfolie und dem mit einer Lackschicht versehenen Blech bestehenden Verbunde wurden über einen Zeitraum von insgesamt 7 Tagen bei -15°C (im Kälteschrank), bei 23°C und 54 % relativer Luftfeuchte und bei 80°C (im Wärmeschrank) untersucht.

Die Prüfung auf Schälfestigkeit der einzelnen Proben erfolgte dabei mit Hilfe einer Zugprüfmaschine bei einer Prüfgeschwindigkeit von 100 mm/min. und einem Probenformat von 15x145 mm. Die Proben lagen also in Form von schmalen Streifen vor. Bei der Prüfung wurden die Folienstreifen manuell über eine Länge von 15 mm von der Lackoberfläche des Bleches abgezogen. An diese Streifenbereiche wurde ein speziell für diesen Einsatzzweck geeignetes, ausreichend langes Klebeband (ohne meßbare Eigendehnung innerhalb des vorgegebenen Prüfbereiches) angebracht.

Im nächsten Schritt wurde das Blech vertikal in die Klemmvorrichtungen der Maschine eingespannt; wobei der Bereich des Bleches, von dem die Folie über 15 mm abgezogen worden war, direkt zwischen die unteren Klemmbacken eingespannt wurde. Zwischen die oberen Klemmbacken wurde das freie Ende des aufgebrachten Klebebandes eingespannt.

Mit dieser Anordnung konnten bei der anschließend durchgeführten Zugprüfung die Folienstreifen, unter Beibehaltung eines konstanten Schälwinkels, von den Blechen abgezogen werden und in einem Weg-Kraft-Diagramm der Verlauf der Schälfestigkeit/Streifen aufgezeichnet werden.

Die Zugprüfungen wurden für alle Probestücke unter Raumtemperaturbedingungen (23°C, 54 % relative Luftfeuchte) durchgeführt.

Bei den durchgeführten Versuchen zeigte sich, daß die verwendeten Oberflächenschutzfolien sowohl bei Temperaturen von -15°C, als auch bei 23°C und bei 80°C auf den Lackoberflächen keinerlei mechanische Schäden zurückließen, unabhängig von der Art des verwendeten Lackes. Darüber hinaus wurden an den Lackoberflächen keine Oberflächenveränderungen oder Kleberablagerungen festgestellt.

### Beispiel 2

Auf den Gepäckträger eines Personenkraftwagens wurden die im Beispiel 1 verwendeten Oberflächenschutzfolien-Blechverbunde so befestigt, daß sie bei Fahrten den Kräften des Fahrtwindes ausgesetzt waren. Die Folien wurden dabei analog dem Beispiel 1 mittels einer Anpreßwalze auf das Blech gebracht. Die mit der Oberflächenschutzfolie beschichteten Bleche wurden horrizontal auf den Gepäckträger fixiert. Die auf diese Weise eingesetzten Verbunde wurden nun 7 Tage lang bei unterschiedlichen Witterungseinflüssen und Fahrtwindgeschwindigkeiten von bis zu 120 km/h auf ihre Eignung getestet.

Die Verbunde überstanden diese Prüfungen ohne sichtbare Beschädigungen. Bei keinem Probenteil löste sich die Oberflächenschutzfolie von der Lackoberfläche ab.

## Patentansprüche

1. Verwendung einer haftenden Oberflächenschutzfolie zum Transport von Automobilen.

2. Verwendung nach Anspruch 1, wobei die Oberflächenschutzfolie aus wenigstens einer Haftschicht und wenigstens einer, auf dieser Haftschicht angebrachten Schutzschicht besteht.

3. Verwendung nach einem der Ansprüche 1 oder 2, wobei die Haftschicht aus Kautschukklebern oder aus Polyolefinen besteht, die mit ungesättigten Carbonsäurederivaten gepfropft sind.

4. Verwendung nach den Ansprüchen 1 bis 3, wobei die auf der Haftschicht aufgebrachte Schutzschicht aus Polyolefinen besteht.

5. Verwendung nach den Ansprüchen 1 bis 4, wobei der Bereich der Frontscheibe des Automobils von der Oberflächenschutzfolie ausgespart wird.

6. Verwendung nach den Ansprüchen 1 bis 5, wobei die Oberflächenschutzfolie im Bereich der Fahrertür des Automobils einen durch eine Perforation leicht von der übrigen Oberflächenschutzfolie entfernbaren Bereich aufweist.

7. Verwendung nach den Ansprüchen 1 bis 6, wobei die Fahrertür des Automobils mit einer eigenen haftenden Oberflächenschutzfolie getrennt vom übrigen Automobil versehen wird.
